# EUROPÄISCHE PATENTANMELDUNG

(11) **EP 2 584 322 A1**
(43) Veröffentlichungstag der Anmeldung: **24.04.2013**
(21) Anmeldenummer: 12189108.9
(22) Anmeldetag: 18.10.2012
(51) Int. Cl.: G01F 11/24, B65G 53/46, B65G 65/48

(54) **Dosierwalzen, Dosiervorrichtungen und Dosierverfahren für Schüttgutpartikel**

(30) Priorität: 19.10.2011 DE 102011084787
(71) Anmelder: Alfons Tschritter GmbH, 97904 Dorfprozelten (DE)
(72) Erfinder: Tschritter, Thorsten, 97909 Stadtprozelten (DE)
(74) Vertreter: Gross, Felix

(57) **Zusammenfassung**

Die Erfindung betrifft u.a. eine Dosiervorrichtung für Schüttgutpartikel, mit einer drehbaren Dosierwalze, an deren Mantelfläche Dosierkammern zur Förderung der Schüttgutpartikel während eines Dosiervorgangs angeordnet sind, dadurch gekennzeichnet, dass mindestens eine Dosierkammer (1) eine in Drehrichtung (U) der Dosierwalze (10) hinten liegende Kammerfläche (2) aufweist, wobei die Kammerfläche (2) als Leitfläche für Schüttgutpartikel (11) ausbildet ist und / oder mindestens zwei Dosierkammern (1A, 1B) miteinander durch einen Verbindungskanal (3) verbunden sind. Die Erfindung betrifft ebenfalls eine Dosierwalze für eine Dosiervorrichtung für Schüttgutpartikel, wobei an der Mantelfläche der Dosierwalze mindestens eine Dosierkammer zur Förderung der Schüttgutpartikel während eines Dosiervorgangs angeordnet ist, dadurch gekennzeichnet, dass die mindestens eine Dosierkammer (1) mindestens abschnittweise rinnenförmig ausgebildet ist, wobei mindestens ein Abschnitt der Dosierkammer (1) unter einem Winkel (ss) zum Umfang (UM) der kreiszylindrischen Dosierwalze (10) angeordnet ist. Ferner betrifft die Erfindung eine Dosiervorrichtung und ein Dosierverfahren.

## Beschreibung

Die Erfindung betrifft Dosierwalzen mit den Merkmalen der Ansprüche 1 und 6, einer Dosiervorrichtung für Schüttgutpartikel mit den Merkmalen der Ansprüche 14 und Dosierverfahren für Schüttgut mit den Merkmalen der Ansprüche 16 und 17.

In vielen Anwendungsgebieten ist es notwendig, Schüttgüter aus einem Materialvorrat zu dosieren. Möglichkeiten, diese Dosierung vorzunehmen, sind z. B. aus der DE 198 09 632 B4 und der WO 2005/014444 A1 bekannt. Diese Vorrichtungen weisen drehbare Dosierkammern auf, bei denen darin liegende Schüttgutpartikel während einer Drehung Scherkräften unterworfen werden können.

Es besteht daher die Aufgabe, eine Dosierwalze, eine Dosiervorrichtung und ein Dosierverfahren zu schaffen, die eine schonende und effiziente Dosierung erlauben.

Diese Aufgabe wird durch eine Dosierwalze für eine Dosiervorrichtung mit den Merkmalen des Anspruchs 1 gelöst.

Dadurch, dass mindestens eine Dosierkammer mindestens abschnittweise rinnenförmig ausgebildet ist und mindestens ein Abschnitt der Dosierkammer unter einem Winkel β zum Umfang der kreiszylindrischen Dosierwalze angeordnet ist, kann ein Schüttgutpartikel in der Dosierkammer seitlich ausweichen, wenn eine Scherkraft auf das Schüttgutpartikel ausgeübt wird.

Vorteilhafterweise beträgt der Winkel β zwischen 10° und 45°. Dies bedeutet, dass die rinnenförmige Dosierkammer mindestens abschnittweise eine Erstreckung quer zur Drehrichtung aufweist.

Auch ist es vorteilhaft, wenn die mindestens eine rinnenförmige Dosierkammer umlaufend auf der Mantelfläche der Dosierwalze angeordnet ist. Dies kann z.B. dadurch erfolgen, dass die mindestens eine rinnenförmige Dosierkammer auf der Mantelfläche die Form einer Sinuskurve aufweist.

Zur Verbesserung des Förderergebnisses können in der Kammerfläche der rinnenförmigen Dosierkammer Vertiefungen und / oder Erhöhungen angeordnet sein.

Die Aufgabe wird auch durch eine Dosierwalze mit den Merkmalen des Anspruchs 6 gelöst.

Dabei ist bei mindestens einer Dosierkammer eine in Drehrichtung der Dosierwalze hinten liegende Kammerfläche als Leitfläche für Schüttgutpartikel ausgebildet und / oder mindestens zwei Dosierkammern sind miteinander durch einen Verbindungskanal verbunden.

Damit können Schüttgutpartikel, auf die z. B. durch mechanische Wechselwirkungen mit einem Gehäuse eine Kraft wirkt, leicht entgegen der Drehrichtung aus der Dosierkammer verschoben werden, ohne dass die Schüttgutpartikel beschädigt werden.

Bei einer konstruktiv einfachen Ausführungsform weist die mindestens eine Kammerfläche mindestens einer Dosierkammer eine Rampe oder eine gekrümmte Leitfläche für Schüttgutpartikel auf. Dabei ist es vorteilhaft, wenn die mindestens eine Kammerfläche einen Winkel α kleiner 45° zur Außenseite der Dosierwalze aufweist. Insbesondere ist es vorteilhaft, wenn der Winkel α zwischen der mindestens einen Kammerwand und der Außenseite der Dosierwalze zwischen 5° und 20° aufweist. Mit einem flachen Auslauf der Kammerfläche relativ zur Außenseite der Dosierwalze können Schüttgutpartikel besonders schonend aus einer Dosierkammer bewegt werden, wenn eine Kraft auf sie wirkt.

Dabei sind bei einer vorteilhaften Ausführungsform die Dosierkammern im Wesentlichen hintereinander in Umfangsrichtung der Dosierwalze angeordnet. Dabei ist es besonders vorteilhaft, wenn die in Drehrichtung hinten liegende Kammerfläche einer ersten Dosierkammer eine Leitfläche für Schüttgutpartikel in einer in Drehrichtung hinter der ersten Dosierkammer liegenden zweiten Dosierkammer aufweist. Damit könnten Schüttgutpartikel effizient von einer Dosierkammer in eine in Drehrichtung dahinter liegende Dosierkammer gefördert werden.

In einer weiteren vorteilhaften Ausführungsform ist die in Drehrichtung vorne liegende Kammerwand der Dosierkammer im Wesentlichen senkrecht ausgebildet.

Vorteilhafterweise weichen die seitlichen Wandungen des Verbindungskanals mindestens teilweise von der Umfangsrichtung der Dosierwalze ab. Durch eine solche, z. B. schlangenförmige, Ausbildung des Verbindungskanals mit darin angeordneten Dosierkammern ist eine besonders schonende Förderung der Schüttgutpartikel möglich. Auch ist es vorteilhaft, wenn mindestens eine Dosierkammer an den seitlichen Wandungen des Verbindungskanals angeordnet ist.

Die Aufgabe wird auch durch eine Dosiervorrichtung mit den Merkmalen des Anspruchs 14 gelöst. Bei einer vorteilhaften Ausgestaltung werden die Schüttgutpartikel aus einem Materialtrichter und / oder einer pneumatischen Fördervorrichtung zur Dosierwalze gefördert. Auch ist die Dosiervorrichtung vorteilhaft für Schüttgutpartikel, wie ein Kunststoffgranulat, Tabletten, Kalk, Futtermittel, Holzpartikel, Düngemittel oder Getreide, einsetzbar. Mit Vorteil werden Schüttgutpartikel mit mittleren Durchmessern zwischen 1 bis 5 mm, insbesondere 2 bis 3 mm gefördert.

Die Aufgabe wird auch durch ein Verfahren mit den Merkmalen des Anspruchs 16 gelöst, wobei
a) Schüttgutpartikel zur Dosierwalze gefördert werden,
b) sich die Schüttgutpartikel mindestens einer Dosierkammer ansammeln, wobei die mindestens eine Dosierkammer mindestens abschnittweise als eine Art Rinne ausgebildet ist, wobei mindestens ein Abschnitt der Rinne unter einem Winkel β zum Umfang der kreiszylindrischen Dosierwalze angeordnet ist, und
c) die Schüttgutpartikel durch die Drehbewegung der Dosierwalze in Umfangsrichtung weiter gefördert werden.

Die Aufgabe wird auch durch ein Dosierverfahren mit den Merkmalen des Anspruchs 18 gelöst.

Dabei werden Schüttgutpartikel zunächst zu einer Dosierwalze gefördert. Anschließend sammeln sich die Schüttgutpartikel in Dosierkammern der Dosierwalze und die Schüttgutpartikel werden durch die Drehbewegung der Dosierwalze in Umfangsrichtung weiter gefördert. Dabei wird bei einer mechanischen Wechselwirkung mit den Schüttgutpartikeln in der mindestens einen Dosierkammer, insbesondere mit einem Gehäuse der Dosierwalze, ein Teil der Schüttgutpartikel über eine in Drehrichtung der Dosierwalze hinten liegende und als Leitfläche ausgebildete Kammerfläche aus der Dosierkammer entgegen der Drehrichtung gefördert und / oder sie werden über einen Verbindungskanal, der mindestens zwei Dosierkammern miteinander verbindet, gefördert.

Ausführungsformen der Erfindung werden im Folgenden durch Figuren dargestellt. Dabei zeigt
- Fig. 1A: eine erste Schnittansicht einer Ausführungsform einer Dosierwalze und einer Dosiervorrichtung;
- Fig. 1B: eine zweite Schnittansicht einer Ausführungsform einer Dosierwalze für eine Dosiervorrichtung;
- Fig. 2: eine Detailansicht einer Dosierwalze gemäß des Standes der Technik;
- Fig. 3A: eine Ausführungsform einer Dosierwalze in einer ersten Betriebsstellung;
- Fig. 3B: eine Ausführungsform einer Dosierwalze in einer zweiten Betriebsstellung;
- Fig. 4: eine Detailansicht einer Ausführungsform einer Dosierkammer;
- Fig. 5: eine Draufsicht auf eine weitere Dosierwalze mit Dosierkammern, die mit einem Verbindungskanal verbunden sind;
- Fig. 6: eine perspektivische Darstellung einer Ausführungsform einer Dosierwalze nach Fig. 5;
- Fig. 7: eine perspektivische Darstellung einer weiteren Ausführungsform einer Dosierwalze;
- Fig. 8: eine Schnittansicht einer Dosiervorrichtung unter Verwendung der Dosierwalze gemäß Fig. 7.

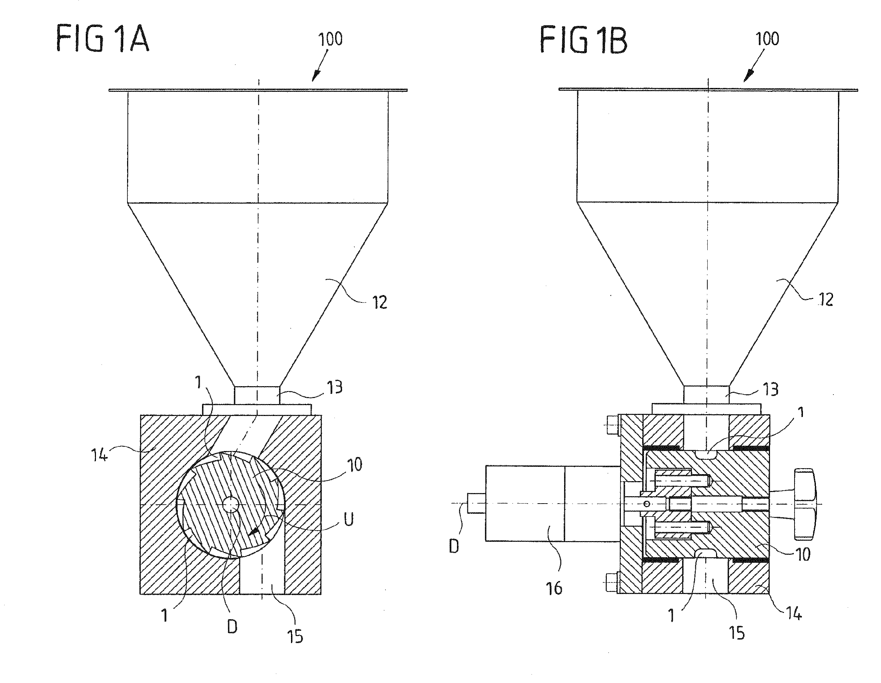

In Fig. 1A und 1B sind zwei Seitenansichten einer Dosiervorrichtung 100 dargestellt. In Fig. 1A ist eine Dosierwalze 10 dargestellt, die um eine senkrecht zur Zeichnungsebene stehende Drehachse D drehbar ist.

Die Dosiervorrichtung 100 weist in der dargestellten Ausführungsform einen Materialtrichter 12 auf, in dem hier nicht dargestellte Schüttgutpartikel 11 gelagert sind.

Im Folgenden werden Ausführungsformen beschrieben, mit denen Kunststoffgranulat gefördert wird. Grundsätzlich ist es aber auch möglich, andere Schüttgüter mit den Ausführungsformen der Erfindung zu dosieren. Stellvertretend für viele Schüttgüter seien hier Tabletten, Kalk, Futtermittel, Holzpartikel, Düngemittel oder Getreide als Schüttgüter genannt. Solche Schüttgutpartikel 11 können z.B. einen mittleren Durchmesser zwischen 1 bis 5 mm, insbesondere 2 bis 3 mm aufweisen.

Die Schüttgutpartikel 11 treten unter Schwerkraftwirkung aus einem Auslauf 13 des Materialtrichters 12 aus und gelangen zu der Dosierwalze 10, die in einem Gehäuse 14 angeordnet ist.

Die Dosierwalze 10 weist in ihrer Mantelfläche eine Reihe von Dosierkammern 1 auf, deren Funktion im Folgenden noch näher beschrieben wird. In den Fig. 1A und 1B sind Schnittansichten der Dosierkammern 1 erkennbar. In Umfangsrichtung der Dosierwalze weisen die Dosierkammern 1 einen im Wesentlichen dreieckigen Querschnitt auf, in axialer Richtung weisen die Dosierkammern 1 einen muldenförmigen Querschnitt auf. In Umfangsrichtung der Dosierwalze sind die Dosierkammern 1 hintereinander angeordnet, wobei sich im Querschnitt eine Art Treppen- oder Sägezahnstruktur ausbildet.

Mithilfe der Dosierkammern 1 ist es möglich, eine bestimmte Menge der Schüttgutpartikel 11 zu fördern, wobei diese bestimmte Menge die Dosiervorrichtung 100 durch den Auslauf 15 verlässt. Die zu dosierende Menge der Schüttgutpartikel 11 wird u. a. durch die Anzahl der Dosierkammern 1 und die Größe der Dosierkammern 1 bestimmt.

Von diesem Auslauf 15 der Dosiervorrichtung 100 werden die Schüttgutpartikel 11 dann an eine Folgevorrichtung, z. B. einen Mischer, ein Zulaufrohr oder einen Materialhauptstrom abgegeben.

Die Dosierwalze 10 wird durch den Antrieb 16 (siehe Fig. 1B) in Rotation versetzt. Die Drehrichtung U ist in Fig. 1A angegeben.

Die konstruktive Ausgestaltung der Dosiervorrichtung 100 ist nur beispielhaft zu verstehen. Es ist nicht zwingend, dass eine Dosiervorrichtung 100 z. B. einen Materialtrichter 12 in der dargestellten Form aufweist. Die Schüttgutpartikel 11 können auch in anderer Form, z. B. durch pneumatische Förderung, zur Dosierwalze 10 gefördert werden.

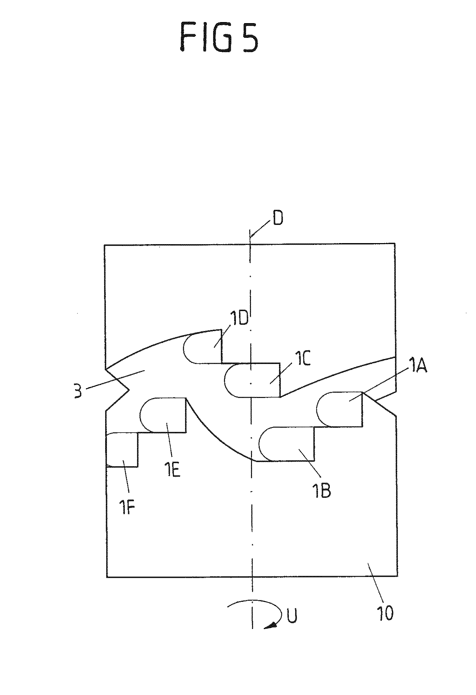

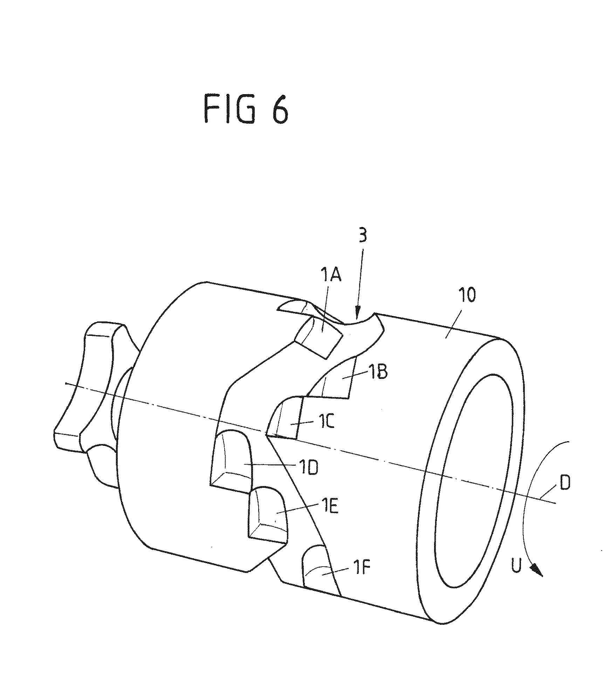

Wie im Folgenden noch beschrieben werden wird (siehe z.B. Fig. 5 und 6), ist es möglich, die Dosierkammern 1 der Dosierwalze 10 durch einen Verbindungskanal 3 zu verbinden.

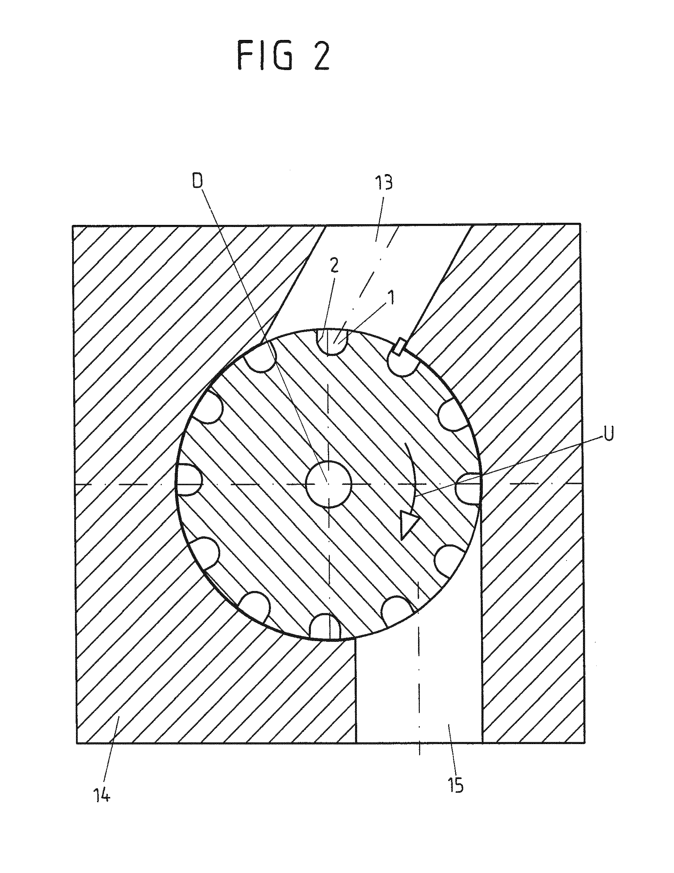

In Fig. 2 ist eine Dosierwalze 10 mit Dosierkammern 1 gemäß dem Stand der Technik dargestellt. Die Dosierwalze 10 ist in einem Gehäuse 14 angeordnet. Der Materialfluss der Schüttgutpartikel 11 (hier nicht dargestellt) erfolgt im Wesentlichen von oben, d. h. vom Auslauf 13 des Materialtrichters 12 zum Auslauf 15 der Dosiervorrichtung 100.

Die Dosierkammern 1 gemäß dem Stand der Technik sind als taschenförmige Vertiefungen in der Mantelfläche der Dosierwalze 10 ausgebildet. Dabei sind die seitlichen Kammerflächen 2 der Dosierkammer 1 im Wesentlichen senkrecht zur Mantelfläche der Dosierwalze 10 angeordnet. Insbesondere sind die in Drehrichtung U hinten liegenden Kammerflächen 2 senkrecht ausgebildet.

Wenn sich die Dosierwalze 10 in der Drehrichtung U dreht, während sich Schüttgutpartikel 11 in der Dosierkammer 1 befinden, so kann der Fall eintreten, dass bei einer mechanischen Wechselwirkung (z. B. mit dem Gehäuse 14) Schüttgutpartikel 11 zwischen der in Drehrichtung U hinteren, steilen Kammerwand 2 und dem Gehäuse 14 festklemmen. Dies ist für ein einziges Schüttgutpartikel 11 in Fig. 2 schematisch dargestellt.

Da die Schüttgutpartikel 11 häufig mechanisch nicht so stabil sind, werden sie durch die beim Einklemmen auftretenden Scherkräfte zerlegt, was unerwünscht ist.

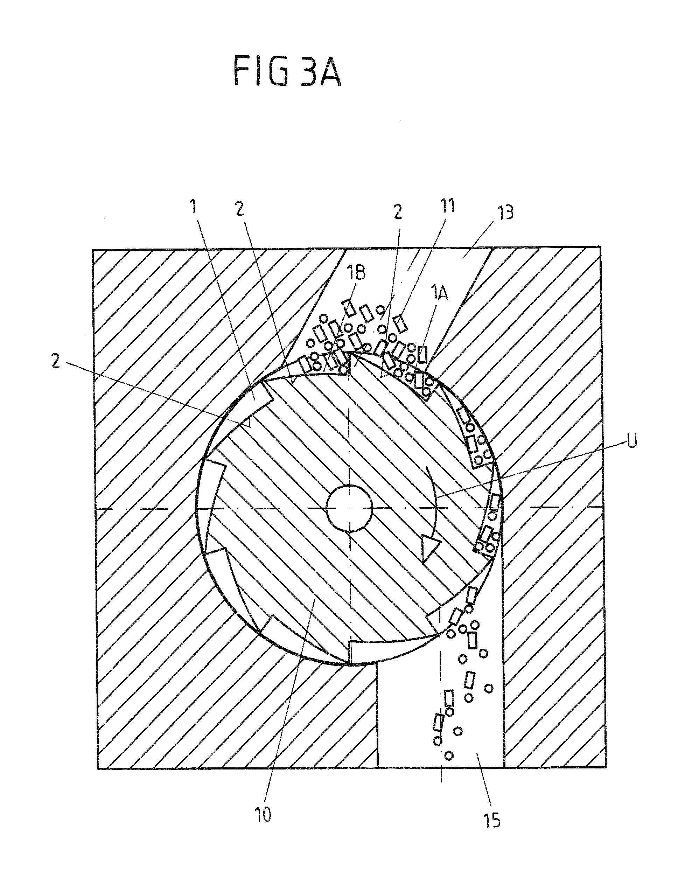

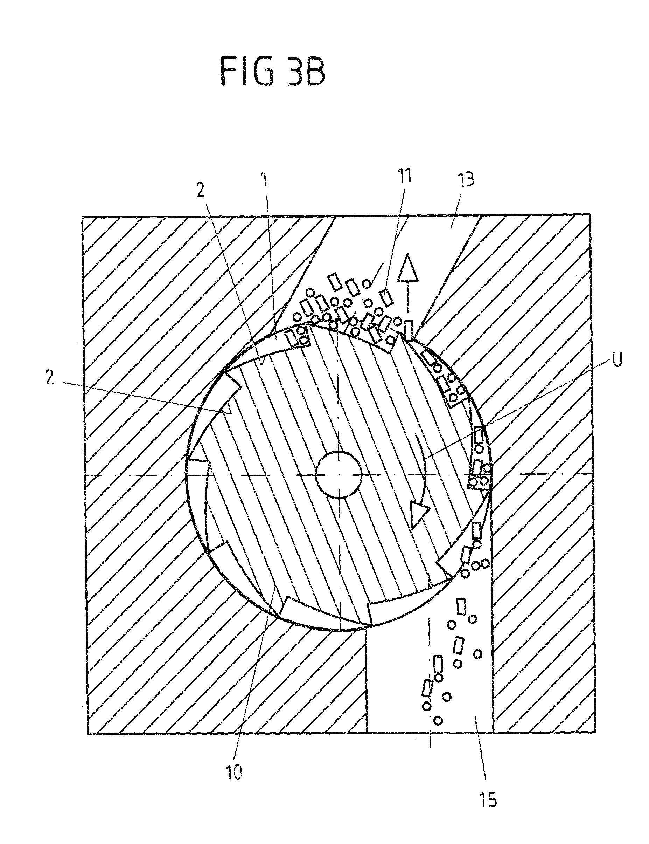

In Fig. 3A und 3B ist die Wirkungsweise einer Ausführungsform der Dosierwalze 1 gemäß der Erfindung dargestellt.

In Fig. 3A ist die Dosierwalze 10 in einer ersten Betriebsstellung dargestellt, bei der Schüttgutpartikel 11 in Drehrichtung U gefördert werden.

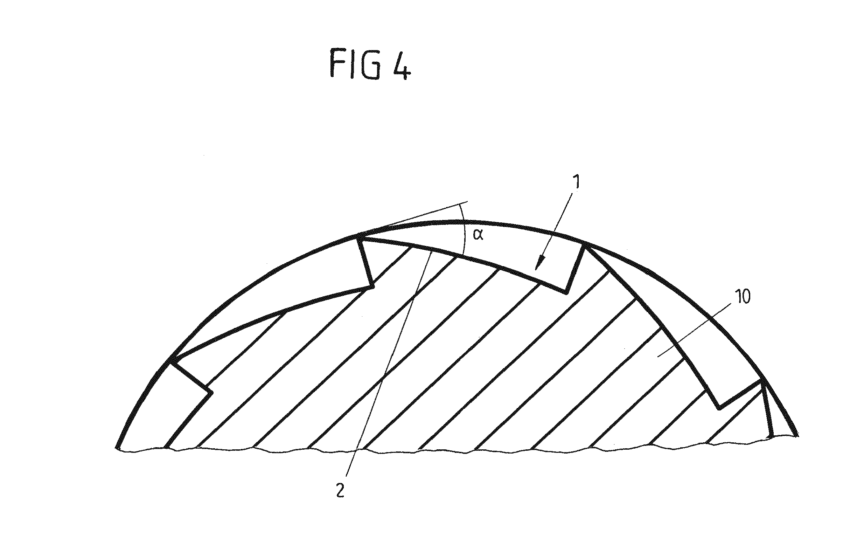

Die Dosierwalze 10 weist an der Mantelfläche Dosierkammern 1 auf, die im Querschnitt im Wesentlichen eine dreieckige Kontur (siehe Fig. 1 und 4) haben. Die Kammerflächen 2, die in Drehrichtung U hinten angeordnet sind, sind als Leitflächen für die Schüttgutpartikel 11 ausbildet. Dies bedeutet, dass Schüttgutpartikel 11 am hinteren Ende der Dosierkammer 1 ohne größere Hindernisse (wie z. B. bei senkrechten Kammerwänden wie in Fig. 2 dargestellt) austreten können, wenn eine mechanische Wechselwirkung - hier zwischen Schüttgutpartikeln 11 und Gehäuse 14 - stattfindet. Die mechanische Wechselwirkung besteht hier darin, dass eine Kante des Gehäuses 14 die Schüttgutpartikel am in Drehrichtung U vorderen Teil einer ersten Dosierkammer 1A zusammenschiebt, so dass nicht alle Schüttgutpartikel 11 in der ersten Dosierkammer 1A liegen bleiben. Die heraus geschobenen Schüttgutpartikel 11 werden über die rampenförmige Leitfläche der hinteren Kammerfläche 2 der ersten Dosierkammer 1A in die zweite Dosierkammer 1B geschoben, ohne dass Schüttgutpartikel 11 geschert werden.

In der dargestellten Ausführungsform weist die rampenförmige Leitfläche, d. h. die Kammerfläche 2, einen Winkel α kleiner 45° zur Außenseite der Dosierwalze 10 (d. h. hier der Mantelfläche) auf, nämlich ca. 15°. In Fig. 4 ist eine Detailansicht einer Dosierkammer 1 dargestellt, in der die Geometrie dargestellt ist.

Die Kammerfläche 2 als Leitfläche für Schüttgutpartikel 11 muss nicht eben ausgebildet sein. Es ist durchaus möglich, dass die Kammerfläche 2 gekrümmt ist, wobei auch bei einer solchen Ausführungsform die Kammerfläche 2 als Leitfläche unter einem flachen Winkel (kleiner 90°) in die Mantelfläche der Dosierwalze 10 übergeht.

Die grundsätzliche Form der Dosierkammern 1 kann dabei relativ frei gewählt werden. In Fig. 5 ist eine Draufsicht auf eine Dosierwalze 10 dargestellt, die in Drehrichtung U um die Drehachse D drehbar ist. In der Fig. 5 sind eine Reihe von Dosierkammern 1A, 1B, 1C, 1D, 1E, 1F dargestellt, die nicht alle auf einer Umfangslinie liegen. Die Dosierkammern 1A, 1B, 1C, 1D, 1E, 1F sind seitlich gegenüber einer Umfangslinie versetzt an den Wandungen eines Verbindungskanals 3 angeordnet. Die jeweils in Drehrichtung U hintere Kammerfläche 2 ist hier als gekrümmte Leitfläche ausgebildet, die unter einem flachen Winkel in den Verbindungskanal 3 mündet. Die einzelnen Dosierkammern 1A, 1B, 1C, 1D, 1E, 1F gehen bei dieser Ausführungsform nicht in die Mantelfläche der Dosierwalze 10 über, sondern in den Verbindungskanal 3, der ebenfalls eine Außenseite der Dosierwalze 1 darstellt. Der Verbindungskanal 3 verbindet die einzelnen Dosierkammern 1A, 1B, 1C, 1D, 1E, 1F miteinander, so dass Schüttgutpartikel 11 ggf. leicht von einer in Drehrichtung U vorderen Dosierkammer 1A, 1B, 1C, 1D, 1E, 1F in eine in Drehrichtung U hintere Dosierkammer 1A, 1B, 1C, 1D, 1E, 1F gelangen können.

In anderen Ausführungsformen können die Dosierkammern 1A, 1B, 1C, 1D, 1E, 1F auch andere Formen haben, d.h. es können auch Dosierkammern 1A, 1B, 1C, 1D, 1E, 1F mit einem Querschnitt gemäß Fig. 2 durch einen Verbindungskanal 3 verbunden werden.

Im Lauf der Drehbewegung schließt z. B. das Gehäuse 14 oder eine Abstreiferkante das Profil der Dosierkammern 1A, 1B, 1C, 1D, 1E, 1F nicht ab. Die Dosierkammern 1A, 1B, 1C, 1D, 1E, 1F sind nach hinten und zum Verbindungskanal 3 geöffnet. Es gibt somit keine Scherkante, an der Schüttgutpartikel 11 geschert werden können.

Damit wird erreicht, dass die Schüttgutpartikel 11 nicht nur radial nach außen geschoben werden, sondern zum Teil auch axial in den Verbindungskanal 3 und darüber hinaus in die nächste Dosierkammer 1A, 1B, 1C, 1D, 1E, 1F.

Ein Verklemmen der Schüttgutpartikel 11 wird somit, auch ohne den Einsatz elastischer Elemente, verhindert. Die Spaltweite zwischen Dosierwalze 1 und dem Gehäuse 14 kann sehr klein gewählt werden. Die Forderung nach produktberührenden Teilen aus Edelstahl kann erfüllt werden.

Auch bewirken die dargestellten, treppenartig angeordneten Dosierkammern 1A, 1B, 1C, 1D, 1E, 1F (siehe z. B. Fig. 3A, 3B) einen wesentlich gleichmäßigeren Materialaustrag als bei geschlossenen Dosierkammern 1 (siehe z. B. Fig. 2).

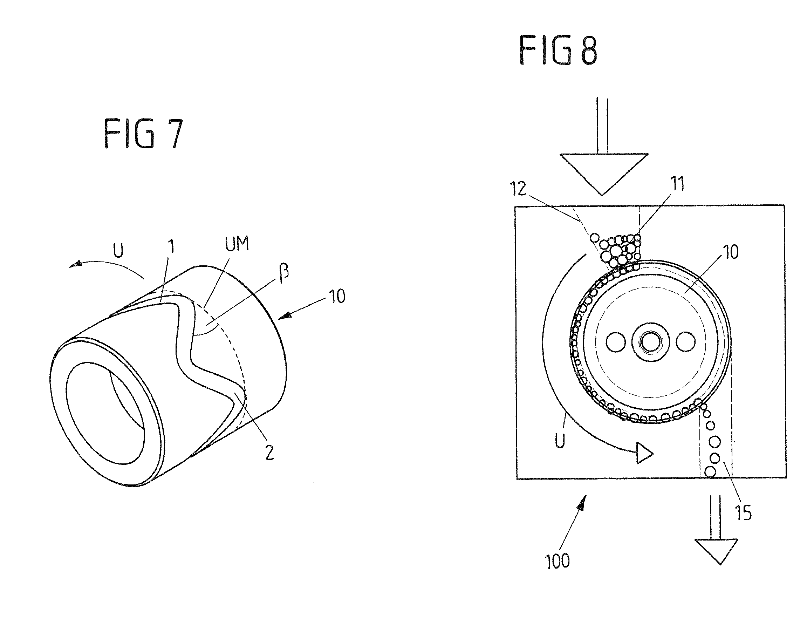

In Fig. 7 ist eine weitere Ausführungsform einer Dosierwalze dargestellt. Dabei ist die Dosierkammer 1 rinnenförmig in der Mantelfläche der Dosierwalze angeordnet. In der dargestellten Ausführungsform weist die rinnenförmige Dosierkammer eine Rinne konstanter Breite auf, wobei die Rinne selbst in Art einer Sinuskurve um die kreiszylindrische Dosierwalze läuft. In anderen Ausführungsformen weist die rinnenförmige Dosierkammer entlang der Rinne Abschnitte mit unterschiedlicher Breite auf.

Durch den Sinusverlauf liegen Abschnitte der Dosierkammer 1 vor, die unter einem Winkel β zum Umfang UM verlaufen. Wenn sich die Dosierwalze 1 dreht, liegt somit immer ein Abschnitt der Rinne unter einem Winkel zur Drehrichtung.

In hier nicht dargestellten Alternativen ist die rinnenförmige Dosierkammer 1 nicht als umlaufende Rinne ausgebildet, sondern setzt sich aus mehreren Rinnenteilen zusammen, die jeweils unter einem Winkel zum Umfang angeordnet sind.

Der Winkel β, der die Neigung zum Umfang angibt, kann vorteilhafterweise zwischen 10° und 45° betragen.

In einer ebenfalls nicht dargestellten Ausführungsform sind in der Wandung der rinnenförmigen Dosierkammer 1 Vertiefungen und / oder Erhöhungen angeordnet, die zu einer verbesserten Förderung der Schüttgutpartikel führen. In der Ausführungsform der Fig. 7 weist die Kammerfläche 2 der Dosierkammer 1 eine gerundete Kontur auf. In alternativen Ausführungsformen kann die Kammerfläche 2 auch eine polygonale Kontur aufweisen

In Fig. 7 ist nur eine rinnenförmige Dosierkammer 1 dargestellt. Grundsätzlich können auch mehrere Dosierkammern 1 nebeneinander angeordnet sein.

In Fig. 8 ist eine Dosiervorrichtung 100 dargestellt, in der eine Dosierwalze gemäß Fig. 7 verwendet wird. Die Drehrichtung U liegt hier entgegen dem Uhrzeigersinn. Die von oben aus dem Materialtrichter 12 auf die Dosierwalze 10 aufgebrachten Schüttgutpartikel 11 liegen in der rinnenförmigen Dosierkammer 1 und werden schließlich zum Auslauf der Dosiervorrichtung 15 befördert. Wenn Scherkräfte an der Vorderkante der rinnenförmigen Dosierkammer 1 angreifen, werden die Schüttgutpartikel 11 quer zur Drehrichtung U in der rinnenförmigen Dosierkammer 1 bewegt, so dass eine Zerkleinerung der Schüttgutpartikel 11 durch Scherkräfte verringert wird.

Dosierverfahren können unter Verwendung einer Dosierwalze nach mindestens einem der Ansprüche 1 bis 13 oder einer Dosiervorrichtung nach mindestens einem der Ansprüche 14 oder 15 durchgeführt werden.

### Bezugszeichenliste

- 1: Dosierkammer
- 2: Kammerfläche
- 3: Verbindungskanal

- 10: Dosierwalze
- 11: Schüttgutpartikel
- 12: Materialtrichter
- 13: Auslauf Materialtrichter
- 14: Gehäuse für Dosierwalze
- 15: Auslauf der Dosiervorrichtung
- 16: Antrieb

- 100: Dosiervorrichtung

- α: Winkel zwischen Kammerwand und Mantelfläche der Dosierwalze
- β: Winkel zwischen einer rinnenförmigen Dosierkammer und dem Umfang der Dosierwalze

- D: Drehachse der Dosierwalze
- U: Drehrichtung
- UM: Umfang der kreiszylinderförmigen Dosierwalze

## Patentansprüche

1. Dosierwalze für eine Dosiervorrichtung für Schüttgutpartikel, wobei an der Mantelfläche der Dosierwalze mindestens eine Dosierkammer zur Förderung der Schüttgutpartikel während eines Dosiervorgangs angeordnet ist,
**dadurch gekennzeichnet, dass**
die mindestens eine Dosierkammer (1) mindestens abschnittweise rinnenförmig ausgebildet ist, wobei mindestens ein Abschnitt der Dosierkammer (1) unter einem Winkel (β) zum Umfang (UM) der kreiszylindrischen Dosierwalze (10) angeordnet ist.

2. Dosierwalze nach Anspruch 1, **dadurch gekennzeichnet, dass** der Winkel (β) zwischen 10° und 45° beträgt.

3. Dosierwalze nach Anspruch 1 oder 2, **dadurch gekennzeichnet, dass** die mindestens eine rinnenförmige Dosierkammer (1) umlaufend auf der Mantelfläche der Dosierwalze angeordnet ist.

4. Dosierwalze nach mindestens einem der vorhergehenden Ansprüche, **dadurch gekennzeichnet, dass** die rinnenförmige Dosierkammer (1) auf der Mantelfläche die Form einer Sinuskurve aufweist.

5. Dosierwalze nach mindestens einem der vorhergehenden Ansprüche, **dadurch gekennzeichnet, dass** in der Kammerfläche (2) der rinnenförmigen Dosierkammer (1) Vertiefungen und / oder Erhöhungen angeordnet sind.

6. Dosierwalze für eine Dosiervorrichtung für Schüttgutpartikel, wobei an der Mantelfläche der Dosierwalze Dosierkammern zur Förderung der Schüttgutpartikel während eines Dosiervorgangs angeordnet sind,
**dadurch gekennzeichnet, dass**
mindestens eine Dosierkammer (1) eine in Drehrichtung (U) der Dosierwalze (10) hinten liegende Kammerfläche (2) aufweist, wobei die Kammerfläche (2) als Leitfläche für Schüttgutpartikel (11) ausbildet ist und / oder mindestens zwei Dosierkammern (1A, 1B) miteinander durch einen Verbindungskanal (3) verbunden sind.

7. Dosierwalze nach Anspruch 6, **dadurch gekennzeichnet, dass** die mindestens eine Kammerfläche (2) einer Dosierkammer (1A, 1B) eine Rampe oder eine gekrümmte Leitfläche für Schüttgutpartikel (11) aufweist.

8. Dosierwalze nach Anspruch 6 oder 7, **dadurch gekennzeichnet, dass** die mindestens eine Kammerfläche (2) einen Winkel (α) kleiner 90° zur Außenseite der Dosierwalze (10) aufweist, insbesondere, dass der Winkel (α) zwischen der mindestens einen Kammerwand (2) und der Außenseite der Dosierwalze (10) zwischen 5° und 20° beträgt.

9. Dosierwalze nach mindestens einem der Ansprüche 6 bis 8, **dadurch gekennzeichnet, dass** die mindestens zwei Dosierkammern (1) im Wesentlichen hintereinander in Umfangsrichtung der Dosierwalze (10) angeordnet sind.

10. Dosierwalze nach mindestens einem der Ansprüche 6 bis 9, **dadurch gekennzeichnet, dass** die in Drehrichtung (U) hinten liegende Kammerfläche (2) einer ersten Dosierkammer (1A) eine Leitfläche für Schüttgutpartikel (11) in einer in Drehrichtung (U) hinter der ersten Dosierkammer (1) liegenden zweiten Dosierkammer (1B) aufweist.

11. Dosierwalze nach mindestens einem der Ansprüche 6 bis 10, **dadurch gekennzeichnet, dass** die in Drehrichtung (U) vorne liegende Kammerfläche (2) der mindestens einen Dosierkammer (1) im Wesentlichen senkrecht ausgebildet ist.

12. Dosierwalze nach mindestens einem der Ansprüche 6 bis 11, **dadurch gekennzeichnet, dass** die seitlichen Wandungen des Verbindungskanals (3) mindestens teilweise von der Umfangsrichtung der Dosierwalze (10) abweichen.

13. Dosierwalze nach mindestens einem der Ansprüche 6 bis 12, **dadurch gekennzeichnet, dass** mindestens eine Dosierkammer (1A, 1B, 1C, 1D, 1F) an den seitlichen Wandungen des Verbindungskanals (3) angeordnet ist.

14. Dosiervorrichtung mit einer Dosierwalze nach mindestens einem der vorhergehenden Ansprüche, **dadurch gekennzeichnet, dass** die Schüttgutpartikel (11) aus einem Materialtrichter (12) und / oder einer pneumatischen Fördervorrichtung zur Dosierwalze (10) gefördert werden, insbesondere dass die Schüttgutpartikel ein Kunststoffgranulat, Tabletten, Kalk, Futtermittel, Holzpartikel, Düngemittel oder Getreide aufweisen.

15. Dosiervorrichtung nach Anspruch 14, **dadurch gekennzeichnet, dass** die Schüttgutpartikel (11) einen mittleren Durchmesser von 1 bis 5 mm, insbesondere 2 bis 3 mm aufweisen.

16. Dosierverfahren für Schüttgutpartikel (11), die mit einer drehbaren Dosierwalze (10) gefördert werden, wobei
a) Schüttgutpartikel (11) zur Dosierwalze (10) gefördert werden,
b) sich die Schüttgutpartikel (11) mindestens einer Dosierkammer (1) ansammeln, wobei die mindestens eine Dosierkammer (1) mindestens abschnittweise als eine Art Rinne ausgebildet ist, wobei mindestens ein Abschnitt der Rinne unter einem Winkel (β) zum Umfang der kreiszylindrischen Dosierwalze (10) angeordnet ist, und
c) die Schüttgutpartikel (11) durch die Drehbewegung der Dosierwalze (10) in Umfangsrichtung weiter gefördert werden.

17. Dosierverfahren für Schüttgutpartikel (11), die mit einer drehbaren Dosierwalze (10) gefördert werden, wobei
a) Schüttgutpartikel (11) zur Dosierwalze (10) gefördert werden,
b) sich die Schüttgutpartikel (11) in Dosierkammern (1) der Dosierwalze (10) sammeln,
c) die Schüttgutpartikel (11) durch die Drehbewegung der Dosierwalze (10) in Umfangsrichtung weiter gefördert werden, und
d) bei einer mechanischen Wechselwirkung der Schüttgutpartikel in mindestens einer Dosierkammer (1), insbesondere mit einem Gehäuse (14) der Dosierwalze (10), ein Teil der Schüttgutpartikel (11) über eine in Drehrichtung (U) der Dosierwalze (10) hinten liegende und als Leitfläche ausgebildete Kammerfläche (2) aus der Dosierkammer (1) entgegen der Drehrichtung (U) gefördert wird und / oder über einen Verbindungskanal (3), der mindestens zwei Dosierkammern (1A, 1B) miteinander verbindet, gefördert wird.
